# FASCICULE DE BREVET EUROPEEN

(11) **EP 0 468 078 B1**
(45) Date de publication et mention de la délivrance du brevet: **25.08.1993**
(21) Numéro de dépôt: 90114401.4
(22) Date de dépôt: 27.07.1990
(51) Int. Cl.: A47J 31/40

(54) **Procédé d'extraction de cartouches fermées et dispositif pour sa mise en oeuvre**
Verfahren zum Aufbrühen von geschlossenen Portionspackungen und Vorrichtung zur Durchführung dieses Verfahrens
Extraction method for closed cartridges and device for carrying out this method

(43) Date de publication de la demande: 29.01.1992
(73) Titulaire: SOCIETE DES PRODUITS NESTLE S.A., 1800 Vevey (CH)
(72) Inventeur: Fond, Olivier, CH-1400 Yverdon (CH)

(56) Documents cités:
- EP-A- 0 242 556
- CH-A- 503 630
- FR-A- 1 537 031
- FR-A- 2 033 190
- FR-A- 2 062 337
- FR-A- 2 322 796
- FR-A- 2 373 999
- US-A- 2 451 195
- US-A- 4 921 712

## Description

L'invention concerne un procédé d'extraction de cartouches fermées contenant du café torréfié et moulu, ladite cartouche ayant sensiblement la forme d'un tronc de cône ou d'un tronc de cône inversé, comprenant une face supérieure et une face inférieure sur laquelle est placée un filtre. L'invention concerne en outre le dispositif pour la mise en oeuvre de ce procédé.

L'utilisation de capsules de café, surtout dans le domaine des cafés type espresso extraits sous pression, est motivée par plusieurs raisons: hygiène, conservation optimale du café, facilité d'usage, meilleure maîtrise de la qualité du café obtenu et bonne reproductibilité des conditions d'extraction. Parmi l'ensemble des capsules disponibles, seules les capsules fermées, s'ouvrant sous l'effet de la pression d'eau injectée, répondent plus complètement aux arguments énoncés ci-dessus. Ces capsules se distinguent par leur système d'ouverture.

Certaines ont, par construction, des zones affaiblies qui se déchireront préférentiellement sous l'effet de la pression. Cette solution présente le désavantage d'augmenter la complexité et le prix de la capsule car les matières employées doivent être traitées de manière très précise pour que l'ouverture soit correcte et reproductible. Une telle construction est décrite dans les brevets FR-A- 2062337, EP-A- 0242556 et FR-A- 2373999.

D'autres sont employées selon un procédé dans lequel, dans un premier temps, sont créées par action mécanique des zones d'affaiblissement dans la membrane inférieure, puis, dans un deuxième temps, l'ouverture de la capsule se fait sous l'action de la pression d'eau injectée par rupture des zones affaiblies.

Un tel procédé décrit dans les brevets FR 1537031 et FR 2033190, présente de nombreux désavantages.

Il est tout d'abord complexe à réaliser car les faces supérieures et inférieures de la cavité du dispositif destiné à recevoir la capsule sont pourvues d'une multitude de saillies et de trous.

De plus, ce procédé ne peut être fiable et reproductible car il est impossible de réaliser sous l'effet de la pression d'eau toutes les ouvertures souhaitées. En effet, dès qu'une ou plusieurs ouvertures ont été obtenues, la pression chute dans la capsule puisque le liquide peut s'écouler.

En conséquence, le nombre et la position des ouvertures sont aléatoires. Cette situation peut entraîner une mauvaise extraction du lit de la substance car, le filtre étant plaqué contre la face inférieure, le drainage de ce dernier n'est pas assuré sur toute la surface. L'extraction est incomplète et hétérogène (zones avec passages préférentiels et zones mal irriguées et drainées).

De plus, un tel procédé n'est pas correct sur le plan de l'hygiène. En effet, étant donné la multitude d'orifices pour le passage de l'eau et la température élevée du dispositif, des dépôts de matières organiques doivent immanquablement s'effectuer.

Enfin, ce procédé peut être sensible au colmatage car les dépôts successifs de matières organiques dans la multitude de petits orifices peuvent contribuer à une obstruction progressive de ces derniers. Dans ces conditions, la qualité et la régularité des extractions s'en trouveront encore plus affectées.

Enfin, ce procédé est employé avec des capsules contenant une substance de base pulvérulente ou liquide. Dans le cas du café, il ne peut s'agir que de café soluble devant être dissout par l'eau ou un café liquide concentré devant être dilué par l'eau.

Le but de la présente invention est de mettre au point un procédé et un dispositif dans lesquels tous les inconvénients mentionnés ci-dessus ont été éliminés et utilisables dans le cas d'une extraction de café moulu, sous pression à partir d'une cartouche comportant une face supérieure et une face inférieure sur laquelle repose un filtre.

L'invention concerne un procédé dans lequel on injecte sous la face supérieure de la cartouche un mélange d'eau et d'air à une pression comprise entre 1 et 10 bars, de manière à éloigner la face inférieure du filtre pour favoriser un bon écoulement à travers toute la surface dudit filtre, ladite face inférieure reposant sur son pourtour sur une bordure et venant lors de sa déformation en contact avec un pointeau central fixe contre lequel elle se déchire, pour permettre ensuite l'évacuation du liquide sous une pression comprise entre 2 et 20 bars.

La face inférieure permet la formation de la chambre collectrice de l'extrait par déformation plastique sous l'effet de la pression du fluide d'extraction. La face inférieure se déchire ensuite en atteignant sa tension de rupture. L'extraction peut alors débuter, le liquide s'écoule à travers l'ouverture. La pression augmente dans la capsule en amont du filtre sous l'effet de la perte de charge du fluide circulant à travers le lit de la substance. Le filtre peut se déformer de manière élastique ou plastique, mais, en aucun cas, il ne se déforme autant que la membrane ne s'est déformée initialement.

Le procédé d'extraction de cartouches selon l'invention est parfaitement reproductible. En effet, la pression d'ouverture de la face inférieure (comprise entre 1 et 10 bars, de préférence 2,5 bars) pouvant être inférieure à la pression d'extraction (comprise entre 2 et 20 bars, de préférence entre 8 et 15 bars), la face inférieure sera toujours correctement déformée et ouverte de manière à créer une chambre collectrice et d'évacuation de l'extrait de café, favorisant ainsi une bonne extraction.

La cartouche utilisée pour la mise en oeuvre du procédé selon l'invention est de forme tronconique avec un diamètre compris entre 2,5 et 6 cm et une épaisseur de lit de café comprise entre 10 et 25 mm. Elle est de préférence en aluminium ou en plastique. Dans le but de diminuer l'épaisseur de la paroi du filtre, lors de l'extraction, on prévoit des ailettes radiales entourant le pointeau central fixe.

Sous l'effet de la pression, la face inférieure et le filtre viennent en appui contre ces ailettes radiales. La surface du filtre pouvant se déformer librement sous la pression se trouve réduite et se limite alors à des secteurs de cercle et non à la surface entière. D'autre part la déformation permanente de ces secteurs de cercle crée à l'endroit des ailettes radiales une structure de renfort du filtre (bourrelets) qui a pour but d'augmenter le moment d'inertie du filtre, lui conférant une meilleure résistance mécanique, d'où la possibilité d'en réduire l'épaisseur, sans toutefois conduire à un déchirement de sa structure. Ce filtre a une épaisseur comprise entre 100 et 300 µm si la capsule est en aluminium et entre 300 et 1000 µm si elle est en plastique.

Dans la cartouche à extraire, comme le lit de café n'est pas très épais, il est préférable d'injecter l'eau sous la paroi supérieure de la cartouche vers le haut de manière à bien mouiller tout le lit de café, par exemple avec le dispositif objet de la demande de brevet européen déposée par la demanderesse, le même jour que la présente demande, sous le titre "Dispositif d'extraction de cartouches fermées".

Avant le début de l'extraction, le pointeau central fixe se trouve sous la paroi inférieure de la cartouche à extraire à une distance comprise entre 0 et 5 mm de préférence de 2 à 3 mm de ladite face inférieure.

L'invention concerne en outre le dispositif pour la mise en oeuvre de ce procédé, comprenant un organe d'injection d'eau, une cage de fixation avec deux rampes de serrage coaxiale avec l'organe d'injection d'eau et un porte-cartouches avec deux pattes de serrage diamétralement opposées et prévues pour s'engager sur les rampes de serrage de la cage de fixation, ledit porte-cartouches comportant un logement de forme sensiblement cylindrique avec une bordure inférieure périphérique pour la cartouche à extraire et sous ce logement un pointeau central fixe.

Par sensiblement cylindrique, on entend aussi une forme tronconique. La bordure inférieure périphérique a une largeur comprise entre 1 et 4 mm. La fonction de cette bordure est de servir d'appui pour la périphérie de la cartouche à extraire de manière à ce que le filtre supporte bien la montée en pression et assure bien sa fonction tout au long de l'extraction.

Dans une seconde forme de réalisation, le dispositif selon l'invention comprend en outre une pièce annulaire avec un logement intérieur dont la forme épouse sensiblement la forme extérieure de la cartouche à extraire et un contour extérieur sur lequel vient s'engager le porte-cartouches.

Le logement du porte-cartouches est de grandeur variable selon la grandeur de la cartouche à extraire.

Dans la première forme de réalisation du dispositif selon l'invention, la cartouche à extraire a une face supérieure de diamètre plus grand que la face inférieure et dans la seconde forme de réalisation, c'est l'inverse, c'est-à-dire la cartouche a une face inférieure de diamètre plus élevé que la face supérieure.

L'extraction de ladite cartouche se déroule ainsi selon les séquences et conditions suivantes:
- mise en place dans le dispositif d'extraction, serrage du porte-cartouches, l'étanchéité se faisant par écrasement de la bordure circulaire supérieure de la capsule entre le rebord supérieur du porte-cartouches et le dispositif d'extraction
- perçage de la cartouche
- injection d'eau dans la partie supérieure de la capsule
- sous l'effet de la pression d'eau, déformation plastique de la face inférieure jusqu'à sa tension de rupture, entraînant une ouverture de celle-ci.
- déformation plastique du filtre sous l'effet de la poussée hydrostatique provoquée par la perte de charge du lit de la substance contenue dans la capsule et du filtre, déformation moins prononcée que celle de la face inférieure de manière à maintenir une chambre collectrice et n'atteignant pas le point de rupture malgré une pression pouvant être plus élevée que la précédente ayant entraîné l'ouverture de la face inférieure.

Le pointeau central fixe est un élément de type cylindrique ou cylindro-conique (section circulaire ou ovale), placé sous la capsule, entraînant une concentration de tension locale de la face inférieure et favorisant une ouverture parfaitement maîtrisée de la face inférieure de la capsule. Ce pointeau a un diamètre compris entre 2 et 10 mm.

Le pointeau a une double fonction, d'une part d'ouverture de la capsule et d'autre part de support du filtre. Par sa présence au centre du dispositif d'extraction, le pointeau assure un appui complémentaire du filtre, réduisant ainsi sa déformation, ce qui permet d'en réduire son épaisseur. L'épaisseur du filtre est choisie de telle manière qu'il vient s'appuyer sur le pointeau sans se déchirer. Le filtre a normalement une épaisseur comprise entre 100 et 1000 µm et il est soudé sur sa périphérie sur la face inférieure de la cartouche.

Comme déjà mentionné ci-dessus, pour limiter l'épaisseur du filtre, le porte-cartouches comporte sous le logement des ailettes radiales entourant le pointeau central fixe. Elles sont au nombre de 3 à 8, leur épaisseur varie de 0,5 à 2 mm et leur forme est arrondie pour ne pas déchirer l'ensemble filtre-paroi inférieure. De manière à assurer un bon écoulement de l'extrait de café, l'arête supérieure des ailettes radiales fait un angle avec l'horizontale compris entre 5 et 20°.

La cartouche utilisée selon l'invention peut être soit avec un filtre posé, soudé ou serti avec la face inférieure.

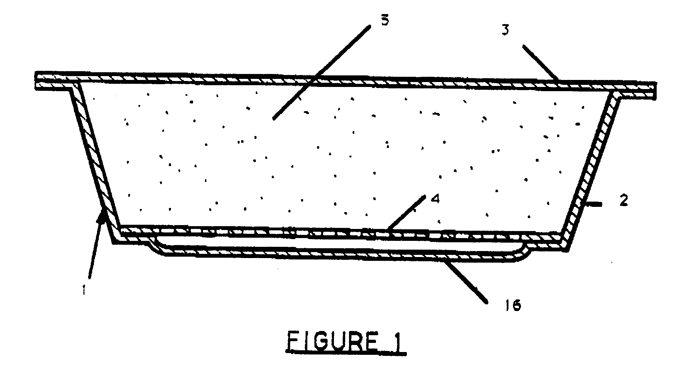

La suite de la description est faite en référence aux dessins sur lesquels
- Fig. 1: est une représentation schématique de la cartouche à extraire,
- Fig. 2: est une coupe de la cartouche dans le dispositif d'extraction selon l'invention,
- Fig. 3: est une coupe selon la Fig. 2, pendant l'extraction proprement dite
- Fig. 4: est une coupe selon la ligne 4-4 de la Fig. 3 et
- Fig. 5: est une coupe du dispositif selon l'invention dans une seconde forme de réalisation.

La cartouche (1) comporte une coupelle (2) de forme tronconique dans laquelle est soudée un filtre (4). Sur le filtre, on dispose le café moulu et torréfié (5) à extraire. On ferme la cartouche avec un opercule (3) formant la face supérieure et la face inférieure (16) de la capsule n'est pas en contact direct avec le filtre (4).

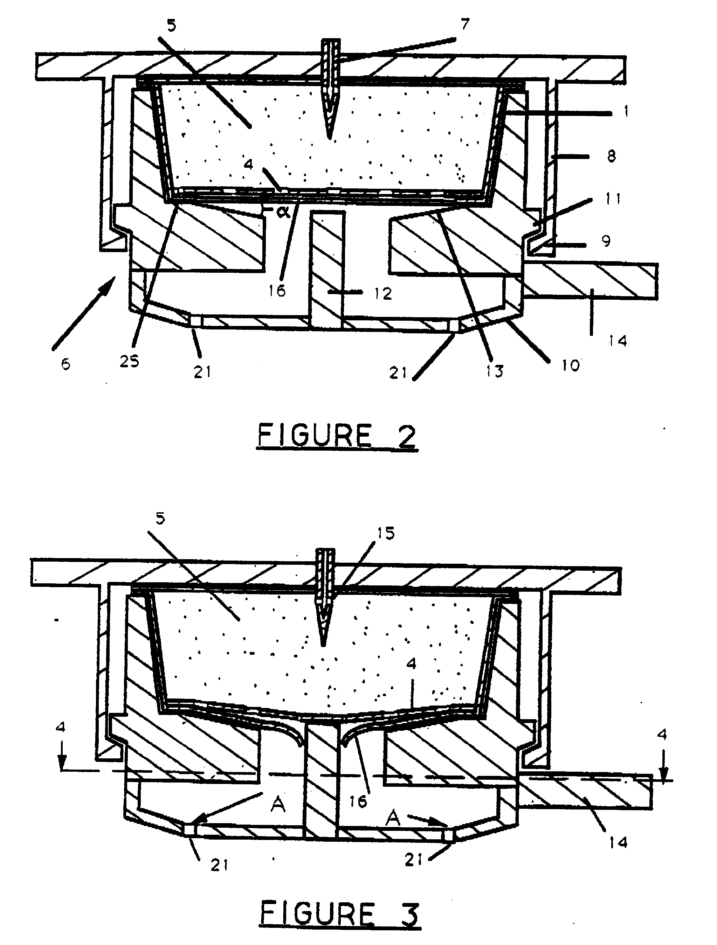

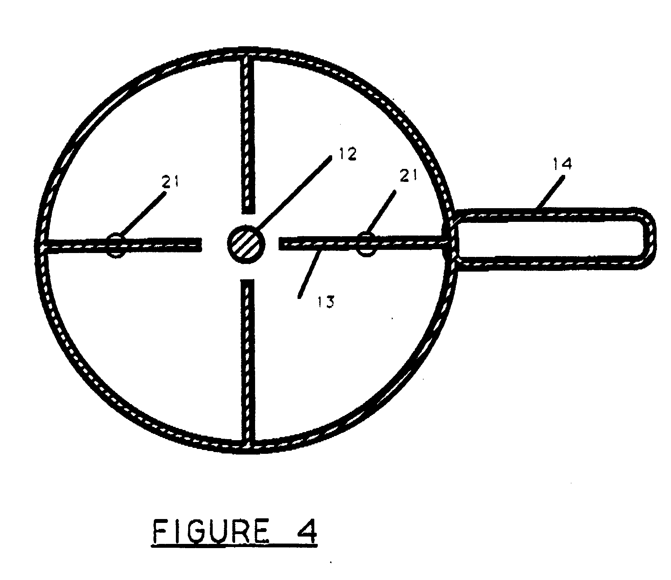

On dispose la cartouche (1) dans le système d'extraction (6) comportant un organe d'injection d'eau (7), une cage de fixation (8) avec rampes de serrage (9) et un porte-cartouche (10) avec deux pattes de serrage (11) venant se loger sur les rampes (9). Le porte-cartouches comporte un logement pour la cartouche avec une bordure inférieure périphérique (25) et sous ce logement un pointeau central fixe (12) et des ailettes radiales (13) supportant la face inférieure (16) et le filtre (4) de la cartouche à extraire. La poignée (14) permet un maniement aisé du porte-cartouches. La Fig. 2 montre la cartouche et le dispositif d'extraction avant injection d'eau. La Fig. 3 montre l'extraction proprement dite. La Fig. 2 montre bien l'angle α que font les ailettes avec l'horizontale.

L'eau arrive par les orifices (15) de l'organe d'injection d'eau et mouille tout le lit de café (5). Sous l'effet de la pression d'eau la face inférieure (16) de la cartouche se déforme et vient appuyer contre le pointeau central (12). La paroi se déchire lorsqu'elle atteint sa tension de rupture. Le filtre se déforme également, mais il a une épaisseur telle qu'il ne se déchire pas. L'extraction proprement dite peut alors commencer. Le liquide s'écoule à travers les ouvertures selon les flèches A, à travers les orifices d'écoulement (21), et la pression augmente dans la capsule. On recueille la boisson dans un récipient (non représenté). On arrive à extraire une cartouche en une minute et on obtient une boisson ayant toutes les caractéristiques d'un café espresso. Dans les figures on a représenté un porte-cartouches avec 4 ailettes radiales, comme on le voit plus particulièrement à la Fig. 4.

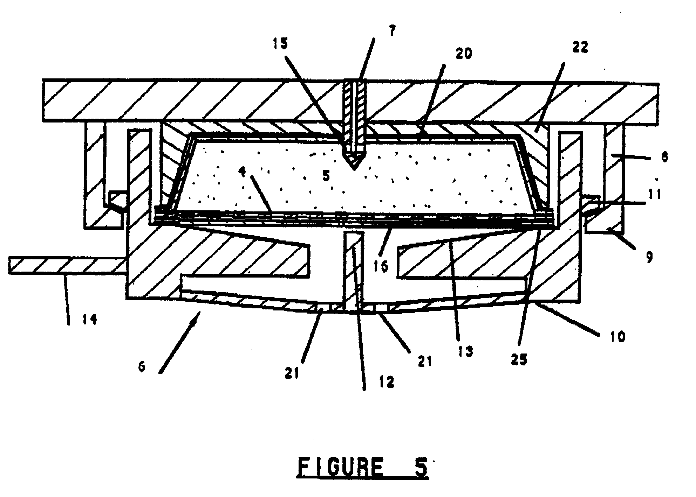

Concernant la Fig. 5, les mêmes éléments que ceux de la Fig. 2 ont été affectés des mêmes numéros de référence. La cartouche (20) contenant le café (5) à extraire diffère en ce sens que sa face inférieure à un diamètre plus élevé que la face supérieure. Le dispositif comprend en outre une pièce annulaire (22) avec un logement intérieur dans lequel se loge la cartouche (20) et un contour extérieur sur lequel s'engage le porte-cartouches (10). Pour le reste le procédé d'extraction de la cartouche reste le même que pour les Fig. 2 et 3. L'étanchéité d'extraction de la capsule est assurée par le pincement des bords de la capsule entre le porte-cartouches et le système d'extraction.

## Revendications

1. Procédé d'extraction de cartouche fermée (1,20) contenant du café torréfié et moulu (5), ladite cartouche ayant sensiblement la forme d'un tronc de cône ou d'un tronc de cône inversé, comprenant une face supérieure et une face inférieure (16) sur laquelle est placé un filtre (4) caractérisé en ce qu'on injecte sous la face supérieure de ladite cartouche un mélange d'eau et d'air à une pression comprise entre 1 et 10 bars, de manière à éloigner la face inférieure du filtre pour favoriser un bon écoulement à travers toute la surface dudit filtre, ladite face inférieure reposant sur son pourtour sur une bordure (25) et venant lors de sa déformation en contact avec un pointeau central fixe (12) contre lequel elle se déchire, pour permettre ensuite l'évacuation du liquide sous une pression comprise entre 2 et 20 bars.

2. Procédé selon la revendication 1, caractérisé en ce qu'on effectue l'extraction sur une cartouche ayant un lit de café d'une épaisseur comprise entre 10 et 25 mm.

3. Procédé selon l'une des revendications 1 et 2, caractérisé en ce que lors de l'extraction, la face inférieure et le filtre appuient sur des ailettes radiales (13) entourant le pointeau central fixe.

4. Procédé selon l'une des revendications 1 à 3, caractérisé en ce qu'on injecte l'eau sous la face supérieure vers le haut de manière à bien mouiller tout le lit de café.

5. Procédé selon l'une des revendications 1 à 4 caractérisé en ce que le pointeau central se trouve avant la déformation de la face inférieure de la cartouche à une distance comprise entre 0 et 5 mm de ladite face.

6. Dispositif pour la mise en oeuvre du procédé selon l'une des revendications 1 à 5 comprenant un organe d'injection d'eau (7), une cage de fixation (8) avec deux rampes de serrage (9) coaxiale avec l'organe d'injection d'eau et un porte-cartouches (10) avec deux pattes de serrage (11) diamétralement opposées et prévues pour s'engager sur les rampes de serrage de la cage de fixation caractérisé en ce que le porte-cartouches comporte un logement de forme sensiblement cylindrique avec une bordure inférieure périphérique pour la cartouche à extraire et sous ce logement un pointeau central fixe.

7. Dispositif selon la revendication 6, caractérisé en ce qu'il comprend en outre une pièce annulaire (20) avec un logement intérieur dont la forme épouse sensiblement la forme extérieure de la cartouche à extraire et un contour extérieur sur lequel vient s'engager le porte-cartouches.

8. Dispositif selon l'une des revendications 6 ou 7, caractérisé en ce que le porte-cartouches comporte sous le logement des ailettes radiales entourant le pointeau central fixe.

9. Dispositif selon l'une des revendications 6 à 8, caractérisé en ce que le pointeau central fixe a une section circulaire ou ovale et un diamètre compris entre 2 et 10 mm.

10. Dispositif selon l'une des revendications 6 à 9, caractérisé en ce qu'il comporte entre 3 et 8 ailettes radiales.

11. Dispositif selon la revendication 10, caractérisé en ce que les ailettes ont une épaisseur comprise entre 0,5 et 2 mm.

12. Dispositif selon l'une quelconque des revendications 6 à 11, caractérisé en ce que l'arête supérieure des ailettes radiales fait un angle avec l'horizontale compris entre 5 et 20°.

## Patentansprüche

1. Verfahren zum Aufbrühen einer gerösteten und gemahlenen Kaffee (5) enthaltenden geschlossenen Portionspackung (1, 20), die im wesentlichen die Form eines Kegelstumpfs oder eines umgekehrten Kegelstumpfs hat und eine Oberseite und eine Unterseite (16) aufweist, auf der ein Filter (14) angeordnet ist, dadurch gekennzeichnet, daß unter die Oberseite der Portionspackung ein Gemisch aus Luft und Wasser mit einem Druck von 1 bis 10 b eingespritzt wird, so daß die Unterseite vom Filter entfernt wird, um einen guten Durchlauf auf der gesamten Oberfläche des Filters zu gewährleisten, wobei die Unterseite an ihrem Umfang auf einer Umrandung (25) aufliegt und bei ihrer Verformung mit einem feststehenden zentralen Stift (12) in Kontakt kommt, durch die sie zerrissen wird, um anschließend das Austreten der Flüssigkeit unter einem Druck von 2 bis 20 b zu gestatten.

2. Verfahren nach Anspruch 1, dadurch gekennzeichnet, daß eine Portionspackung aufgebrüht wird, die eine Kaffeeschicht mit einer Dicke von 10 bis 25 mm enthält.

3. Verfahren nach einem der Ansprüche 1 und 2, dadurch gekennzeichnet, daß die Unterseite und das Filter beim Aufbrühen auf radialen Rippen (13) aufliegen, die den feststehenden zentralen Stift umgeben.

4. Verfahren nach einem der Ansprüche 1 bis 3, dadurch gekennzeichnet, daß das Wasser unter der Oberseite nach oben eingespritzt wird, so daß die gesamte Kaffeeschicht benetzt wird.

5. Verfahren nach einem der Ansprüche 1 bis 4, dadurch gekennzeichnet, daß der zentrale Stift sich vor der Verformung der Unterseite der Portionspackung in einem Abstand von 0 bis 5 mm von dieser Seite befindet.

6. Vorrichtung zur Durchführung des Verfahrens nach einem der Ansprüche 1 bis 5 mit einem Wassereinspritzorgan (7), einer Halterung (8) mit zwei zum Wassereinspritzorgan koaxialen Einspannrampen (9) und einem Portionspackungsträger (10) mit zwei diametral einander entgegengesetzten Einspannrippen (11), die über die Einspannrampen der Halterung treten, dadurch gekennzeichnet, daß der Potionspackungsträger eine Rammer mit im wesentlichen zylindrischer Form und mit einer unteren Umfangsumrandung für die aufzubrühende Portionspackung und unter dieser Kammer einen feststehenden zentralen Stift aufweist.

7. Vorrichtung nach Anspruch 6, dadurch gekennzeichnet, daß sie ferner ein ringförmiges Teil (20) mit einer inneren Aussparung, deren Form im wesentlichen der Außenform der aufzubrühenden Portionspackung entspricht, und einem Außenumriß aufweist, den der Portionspackungsträger umschließt.

8. Vorrichtung nach einem der Ansprüche 6 oder 7, dadurch gekennzeichnet, daß der Portionspackungsträger unter der Kammer radiale Rippen aufweist, die den feststehenden zentralen Stift umgeben.

9. Vorrichtung nach einem der Ansprüche 6 bis 8, dadurch gekennzeichnet, daß der feststehende zentrale Stift einen kreisförmigen oder ovalen Querschnitt und einen Durchmesser von 2 bis 10 mm hat.

10. Vorrichtung nach einem der Ansprüche 6 bis 9, dadurch gekennzeichnet, daß sie drei bis acht radiale Rippen besitzt.

11. Vorrichtung nach Anspruch 10, dadurch, daß die Rippen eine Dicke von 0,5 bis 2 mm haben.

12. Vorrichtung nach einem der Ansprüche 6 bis 11, dadurch gekennzeichnet, daß die Oberkante der radialen Rippen mit der Horizontalen einen Winkel von 5 bis 20° bildet.

## Claims

1. A process for extracting sealed cartridges (1,20) containing roasted and ground coffee (5), said cartridge being substantially in the form of a frustum or inverted frustum comprising an upper face and a lower face (16) on which a filter (4) is placed, characterized in that a mixture of water and air under a pressure of 1 to 10 bar is injected through the upper face of the cartridge to move the lower face away from the filter in order to promote good flow over the entire surface of the filter, the lower face resting at its periphery on a rim (25) and coming into contact during its deformation with a fixed central point (12) against which it tears to enable the liquid to be subsequently removed under a pressure of 2 to 20 bar.

2. A process as claimed in claim 1, characterized in that a cartridge in which the thickness of the coffee layer is between 10 and 25 mm is extracted.

3. A process as claimed in claim 1 or 2, characterized in that, during the extraction process, the lower face and the filter rest on radial fins (13) surrounding the fixed central point.

4. A process as claimed in any of claims 1 to 3, characterized in that the water is injected upwards beneath the upper face so that the entire layer of coffee is thoroughly wetted.

5. A process as claimed in any of claims 1 to 4, characterized in that, before deformation of the lower face of the cartridge, the central point is situated at a distance of 0 to 5 mm from that face.

6. A device for carrying out the process claimed in any of claims 1 to 5 comprising a water injector (7), a fixing cage (8) with two retaining ramps (9) coaxial with the water injector and a cartridge holder (10) with two diametrically opposite retaining lugs (11) designed to cooperate with the retaining ramps of the fixing cage, characterized in that the cartridge holder comprises a substantially cylindrical recess with a lower peripheral rim for the cartridge to be extracted and, beneath the recess, a fixed central point.

7. A device as claimed in claim 6, characterized in that it additionally comprises an annular element (20) with an inner recess, of which the shape substantially corresponds to the outer shape of the cartridge to be extracted, and an outer contour with which the cartridge holder is designed to engage.

8. A device as claimed in claim 6 or 7, characterized in that, beneath the recess, the cartridge holder comprises radial fins surrounding the fixed central point.

9. A device as claimed in any of claims 6 to 8, characterized in that the fixed central point has a circular or oval cross-section and a diameter of 2 to 10 mm.

10. A device as claimed in any of claims 6 to 9, characterized in that it comprises between 3 and 8 radial fins.

11. A device as claimed in claim 10, characterized in that the fins have a thickness of 0.5 to 2 mm.

12. A device as claimed in any of claims 6 to 11, characterized in that the upper edge of the radial fins forms an angle of 5 to 20° with the horizontal.
